(19) Europäisches Patentamt

European Patent Office

Office européen des brevets

(11) **EP 0 487 582 B1**

## (12) EUROPEAN PATENT SPECIFICATION

(45) Date of publication and mention
of the grant of the patent:
**03.05.2000 Bulletin 2000/18**

(21) Application number: **90912347.3**

(22) Date of filing: **15.08.1990**

(51) Int. Cl.$^{7}$: **G01N 22/04**

(86) International application number:
**PCT/AU90/00351**

(87) International publication number:
**WO 91/02966 (07.03.1991 Gazette 1991/06)**

(54) **MOISTURE CONTENT BY MICROWAVE PHASE SHIFT AND MASS/AREA**

BESTIMMUNG DES FEUCHTIGKEITSGEHALTS DURCH
MIKROWELLENPHASENVERSCHIEBUNG UND FLÄCHENDICHTE

DETERMINATION DE LA TENEUR EN HUMIDITE D'UN PRODUIT PAR CALCUL DU DEPHASAGE
DE MICRO-ONDES ET DU RAPPORT MASSE/SURFACE

(84) Designated Contracting States:
**AT BE CH DE DK ES FR GB IT LI LU NL SE**

(30) Priority: **15.08.1989 AU 578489**

(43) Date of publication of application:
**03.06.1992 Bulletin 1992/23**

(73) Proprietor:
**COMMONWEALTH SCIENTIFIC AND
INDUSTRIAL RESEARCH ORGANISATION
Campbell, ACT 2612 (AU)**

(72) Inventor:
**CUTMORE, Nicholas, George
Croydon Park, NSW 2133 (AU)**

(74) Representative:
**Cross, Rupert Edward Blount
BOULT WADE TENNANT,
Verulam Gardens
70 Gray's Inn Road
London WC1X 8BT (GB)**

(56) References cited:
| | |
|---|---|
| AU-A- 6 703 386 | DE-A- 3 407 819 |
| GB-B- 1 376 747 | US-A- 4 193 027 |
| US-A- 4 297 874 | US-A- 4 727 311 |
| US-A- 4 788 853 | |

- PATENT ABSTRACTS OF JAPAN vol. 9, no. 148 (P-366)22 June 1985 & JP-A-60 025 446 ( SHIN NIPPON SEITETSU KK ) 8 February 1985
- PATENTS ABSTRACTS OF JAPAN, P 342, page 133 & JP,A,59-197842 (YOKOGAWA HOKUSHIN DENKI K.K.) 9 November 1984
- PATENTS ABSTRACTS OF JAPAN, P 1039, page 77 & JP,A,2 038959 (KAWASAKI KIKO KK) 8 February 1990
- DERWENT ABSTRACT Accession No 87-361906/51 & SU,A,1312457 (TASHKENT POLY) 23 May 1987

**Description**

This invention relates to the determination of the moisture content of a sample.

The measurement of moisture content is important in many industrial processes. The conventional methods of moisture measurement, based on oven-drying of a sample taken from the process stream, are frequently not rapid enough for quality control purposes and rely on the small sample analysed being representative of the total stream. Consequently, there is a requirement for on-line analysis techniques that provide a continuous analysis of the process stream.

One important example is in the on-line measurement of moisture in coal carried on a conveyor belt. In recent years there has been a growing interest in measuring and controlling the moisture content of coking and steaming coals. Moisture in these coals has increased mainly because of the increased proportion of fine coal in preparation plants as a result of modern mining methods and because greater emphasis is placed on fine coal recovery for economic reasons. Lower product coal moisture results in lower transport costs, energy savings when the coal is utilised and reduced handling difficulties.

A number of techniques have been investigated for the on-line determination of moisture in coal. These include capacitance measurement, microwave transmission, fast neutron and gamma-ray transmission, infrared reflectance and nuclear magnetic resonance.

Moisture measurement by microwave techniques is based either on the high real or imaginary part of the complex dielectric constant of water compared to the dielectric properties of the majority of dry materials. The complex dielectric constant ($\varepsilon = \varepsilon' - j\,\varepsilon''$) is a function of the dielectric constant ($\varepsilon'$) and the loss factor ($\varepsilon''$) of a material, and for coal is not only influenced by the moisture content, but also other material properties such as bulk density, ash content and coal rank. The parameter most frequently used is a measurement of the attenuation or power loss of a transmitted beam of microwaves at a frequency in the range of 2-10 GHz, and for on-belt measurement of moisture in coal, a measurement of bulk density and/or coal layer thickness is also required.

A measurement of microwave attenuation has been widely used for the determination of moisture content in a range of materials. However, the attenuation measurement is very dependent on the sample thickness and sample position relative to the microwave source, and therefore use of the technique in on-line measurement applications has relied on presentation of a constant thickness layer of material to the gauge. This has been achieved using devices such as a levelling plough or a recirculating levelling conveyor that level the top surface of material carried on a conveyor belt. A disadvantage of these techniques is that contacting devices of this type may cause blockages in the flow of material. An alternative technique is to perform measurements on a sample by-line where sample presentation can be carefully controlled, however, this is more costly and the frequency of the analysis is determined by the rate of sampling.

A number of attempts have been made to modify the attenuation measurement technique to improve its accuracy for the determination of moisture content. These have involved an improved design of microwave apparatus to minimise interferences from reflection at the antennae, the use of reference signals to overcome problems with equipment drifts and the use of lens corrected antennae to improve signal directivity. However, the predominant error in the measurement of attenuation results from amplitude modulation of the transmitted signal by signals reflected from the sample/air interfaces. One proposed method of reducing the error resulting from such amplitude modulation is to measure the attenuation at 50-100 frequencies in a 0.5-1 octave frequency band and correlate the mean value with moisture content. This technique is reported to reduce the influence of variation in sample thickness and position on the attenuation measurement.

A measurement of microwave phase shift has also been investigated for the determination of moisture. In the on-line measurement of moisture by this technique the measured phase shift or attenuation are normalized to the sample mass per unit area determined from a gamma-ray transmission measurement.

A combined measurement of phase shift and attenuation has also been proposed to determine moisture independent of variations in the sample density. In this technique the moisture content is determined from the difference in the attenuation at two measurement frequencies and a measurement of phase shift compensates for density variation. However, for on-line measurement either a constant thickness sample or a measurement of sample thickness is required.

Apparatus using the attenuation of two microwave signals at different frequencies and the phase shift of one of them is disclosed in US-A-4727311. JP-A-60025446 discloses apparatus having the pre-characterising features of Claim 1.

The present invention provides apparatus for the determination of the moisture content of a sample of varying thickness on a conveyor belt, said apparatus comprising: generating means for generating microwave signals at a plurality of discrete frequencies, said generating means being adapted to generate said microwave signals sequentially at frequencies selected to compensate for frequency dependent cyclic variation of the propagation characteristics of the microwave signals transmitted through a sample of varying thickness; a first antenna for location on one side of said conveyor belt to direct said microwave signals through the sample; a second antenna for location on the opposite side of said belt to receive the microwave signals transmitted through the sample; and means for providing a measure of mass per unit area of the sample; the apparatus being characterised by means for providing measures of the phase shifts of the received signals with respect to the transmitted signals at said discrete frequencies; and means for generating a measure of moisture content of the sample based on said measures of phase shifts and mass per unit area.

The present invention further provides a method for the determination of the moisture content of a sample of varying thickness on a conveyor belt, said method comprising the following steps: transmitting, through said sample, microwave signals at a plurality of discrete frequencies, said microwave signals being generated sequentially at frequencies selected to compensate for frequency dependent cyclic variation of the propagation characteristics of the microwave signals transmitted through a sample of varying thickness; and providing a measure of mass per unit area of the sample; the method being characterised by the steps of providing measures of the phase shifts of the received signals with respect to the transmitted signals at said discrete frequencies; and generating a measure of moisture content of the sample based on said measures of phase shifts and mass per unit area.

Preferably the discrete frequencies are equally spaced and the range encompasses one or more periods of the frequency dependent cyclic variation in propagation characteristics within the sample. Preferably, the phase shifts of the respective signals are averaged to produce a single representative value.

Preferably the range of transmitted frequencies is within the range of 2 to 4 GHz. Preferably, also, the number of discrete frequencies is greater than ten.

The antenna can be of any suitable kind, for example horns or dielectric rods. In the case of horn antennae, the horns can be filled with impedance matching material.

This has the effect of reducing the interference of the transmitted signals with signals reflected from the sample. In this case, the distance from the first antenna to the sample is preferably substantially less than the wavelengths of the microwave signals.

Mass per unit area may be measured by conventional techniques such as gamma-ray attenuation. If the density of the material analysed is approximately constant then a measurement of thickness, determined by any suitable technique, for example, ultrasonic ranging, may be substituted for a measurement of mass per unit area.

The propagation of an electromagnetic wave (EM) in a dielectric medium is described by Maxwell's equations, and the complex amplitude given by

$$E(1) = E_0 \exp(-\gamma 1) \tag{1}$$

where 1 is the distance travelled by the EM wave in the dielectric medium from some reference point where its amplitude was $E_0$, and $\gamma$ is the propagation constant of the wave given by

$$\gamma = \alpha + j\beta \tag{2}$$

where $\alpha$ and $\beta$ are the attenuation and phase constants respectively. For a non-magnetic dielectric medium in free space $\alpha$ and $\beta$ are given by

$$\alpha = \frac{2\pi}{\lambda_0} \left[ \frac{\varepsilon'}{2\varepsilon_0} [(1+(\varepsilon''/\varepsilon')^2)^{1/2} -1] \right]^{1/2} \tag{3}$$

$$\beta = \frac{2\pi}{\lambda_0} \left[ \frac{\varepsilon'}{2\varepsilon_0} [(1+(\varepsilon''/\varepsilon')^2)^{1/2} +1] \right]^{1/2} \tag{4}$$

where $\varepsilon_0$ is permittivity of free space, $\lambda_0$ the wavelength in free space, $\varepsilon'$ the dielectric constant of the medium and $\varepsilon''$ the loss factor of the medium.

The attenuation constant $\alpha$ represents the attenuation of the EM wave (in nepers per metre) and the phase constant $\beta$ represents the phase shift of the EM wave (in radians per metre).

From equations (3) and (4), it can be seen that the attenuation and phase shift of an EM wave in a dielectric is a function of the complex permittivity of the medium,

$$\varepsilon^* = \varepsilon' - j\varepsilon'' \tag{5}$$

For a multicomponent dielectric medium the complex permittivity may be approximated by

$$\varepsilon^*_{medium} = ( \sum_i v_i \sqrt{\varepsilon^*_i})^2 \qquad (6)$$

where $v_i$ and $\varepsilon^*_i$ are the volume fraction and complex permittivity of the $i^{th}$ component respectively.

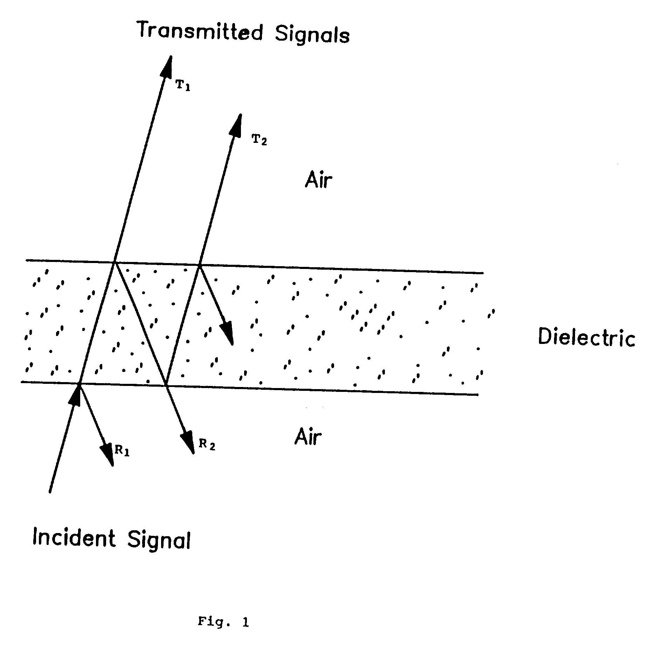

When a plane EM wave is incident upon a dielectric interface, part of it is reflected and part transmitted as illustrated in figure 1. For a non-magnetic dielectric in air the reflection coefficient, R, and transmission coefficient, T, are given by

$$R = \frac{E_R}{E_0} = \frac{1 - \sqrt{\varepsilon^*/\varepsilon_0}}{1 + \sqrt{\varepsilon^*/\varepsilon_0}} \qquad (7)$$

$$T = \frac{E_T}{E_0} = 1 + R \qquad (8)$$

where $E_0$, $E_R$ and $E_T$ are the incident, reflected and transmitted electric field vectors.

The measured transmission coefficient may be expressed as

$$T = 10^{-A/10} \exp\left( \frac{j.2\pi.\theta}{360} \right) \qquad (9)$$

where A is the measured attenuation in dB, and $\theta$ the measured phase shift in degrees. The actual phase shift due to the sample, $\phi$ is not determined in this measurement but is given by

$$\phi = n.360 + \theta \qquad (10)$$

where n is an integer.

When an EM wave is incident upon a dielectric slab (Figure 1), reflection at the sample-air interface results in multiple reflections within the dielectric slab. Consequently, the measured transmitted and reflected EM waves, at normal incidence, are found from

$$T = \sum_i T_i = \sum_i a_i e^{j\phi i} \qquad (11)$$

$$R = \sum_i R_i = \sum_i b_i e^{j\theta i} \qquad (12)$$

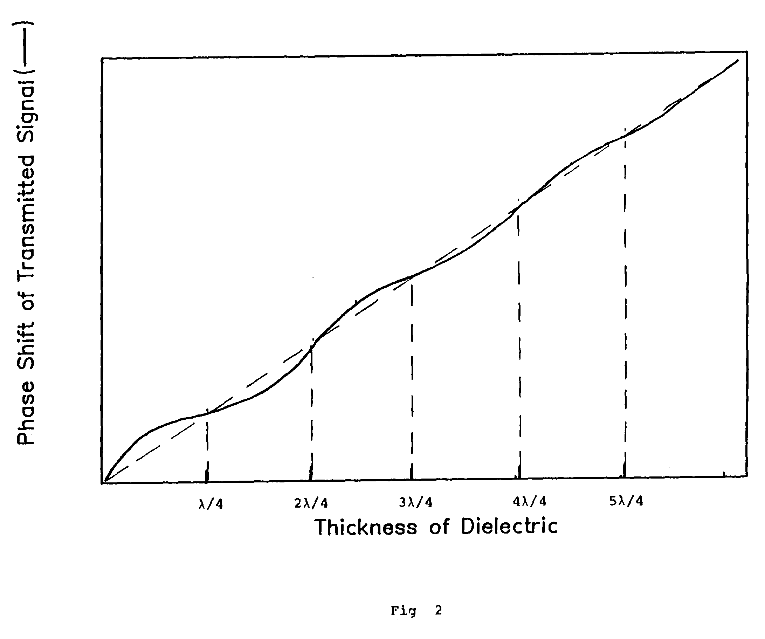

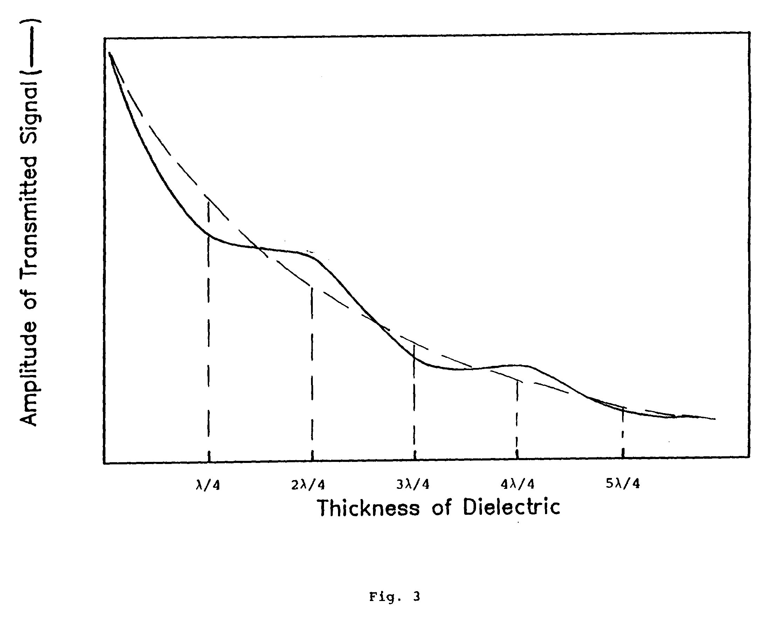

where $T_i$ and $R_i$ are the component transmitted and reflected EM waves due to multiple reflections. For a lossy dielectric slab, $a_i \ll a_{i+1}$ and $b_i \ll b_{i+1}$, and T and R may be approximated from the sum of only the first two or three component signals. The effect of the change in the thickness of the dielectric on the measured phase shift and amplitude of T is shown in Figures 2 and 3 respectively. Both phase shift and amplitude vary in magnitude with a periodicity corresponding to an effective $\lambda/4$ change in the EM wave path length in the dielectric. The phase shift and amplitude of the reflected signal R, are found to also vary in a similar manner. That is, the propagation characteristics exhibit a frequency dependent cyclic variation. For a lossy dielectric, the magnitude of the variation in the phase shift and amplitude of the transmitted or reflected signals decreases with increasing sample thickness.

According to a preferred form of this invention a microwave signal is directed through a sample, using suitable transmitting and receiving antennae and the phase shift of the signal due to the sample is measured. This is normally calculated as the difference between the attenuation and phase shift determined with the sample and with air. From equations (3) and (4) it can be seen that the phase shift of the signal is a function of the effective complex permittivity $\varepsilon^*$ of the sample, given by equation (6). The dielectric constant and loss factor of water at microwave frequencies are large compared to those for most other common materials, and therefore the phase shift is a strong function of the moisture content of the sample.

It is known that in the measurement of moisture content of a sample by microwave transmission the phase shift is determined mainly by the effective dielectric constant of the material and is therefore independent of variations in the effective loss factor (caused by variations in material properties such as salt content or elemental composition) that significantly influence attenuation. This invention seeks to remove the significant error in the measurement of phase shift, resulting from modulation of the transmitted signal by signals reflected from the sample/air interfaces. This is particularly significant in many on-line measurement applications where there is a variation in sample density or thickness, as this has the effect of varying the effective path length of the transmitted and reflected signals in the sample and, consequently, the degree of amplitude modulation of the transmitted signal.

The component of the microwave signal reflected at each sample-air interface is determined by the difference in the refractive indices of the sample and air and the angle of incidence, and for non-conducting non-magnetic materials is effectively determined by the difference in the relative dielectric constants. According to one form of this invention, improving measurement accuracy includes the use of a matching dielectric medium between the microwave transmitting antenna and the sample to minimise secondary reflections of the microwave signal within the sample. If a horn antenna is used as the transmitter, this may be achieved by filling the horn with a dielectric that has a similar dielectric constant to the sample, and positioning the horn such that the horn-to-sample distance is significantly less than the wavelength of the microwave signal. As the effective dielectric constant of the sample varies proportionately with sample density and moisture content, perfect dielectric matching is not possible; however, dielectric matching to the mean effective dielectric constant of the sample is sufficient to obtain a significant improvement in measurement accuracy.

Phase shift is determined from measurements at a plurality of frequencies, and the frequency range and number of measurements are selected to further minimise measurement error due to interference of transmitted and reflected signals. The periodicity in the interference of these signals corresponds to a $\lambda/4$ path length difference between them, and the range of sample thickness or density variation for this to occur is determined by the measurement frequency and sample effective dielectric constant. The same periodicity may be obtained at constant sample thickness for an equivalent variation $\triangle f$ of the measurement frequency. Determination of the moisture content from measurement of phase shift over a frequency range $\triangle f$ (or $n\triangle f$ where n is an integer) is less affected by variation in sample thickness or density than measurement at a single frequency and a more accurate measurement of moisture is possible.

For example, in Figure 2 the variation in the phase shift is repeated at $2(\lambda/4)$ intervals in the dielectric path length. The equivalent thickness of dielectric for this to occur is determined by the effective dielectric constant (Equation (6)) of the dielectric and the microwave frequency (f), and is given by,

$$\lambda/2 = C/2f \sqrt{\varepsilon^{*}_{medium}} \tag{13}$$

where C is the velocity of light. For a dielectric of constant thickness the same periodicity in the measured phase shift will occur when the frequency is varied from $f_2$ to $f_2$, ($\triangle f = f_2 - f_1$), such that the dielectric path length is ($n\lambda_1$)and

$$\left(n\lambda_2 + \frac{\lambda_2}{2}\right)$$

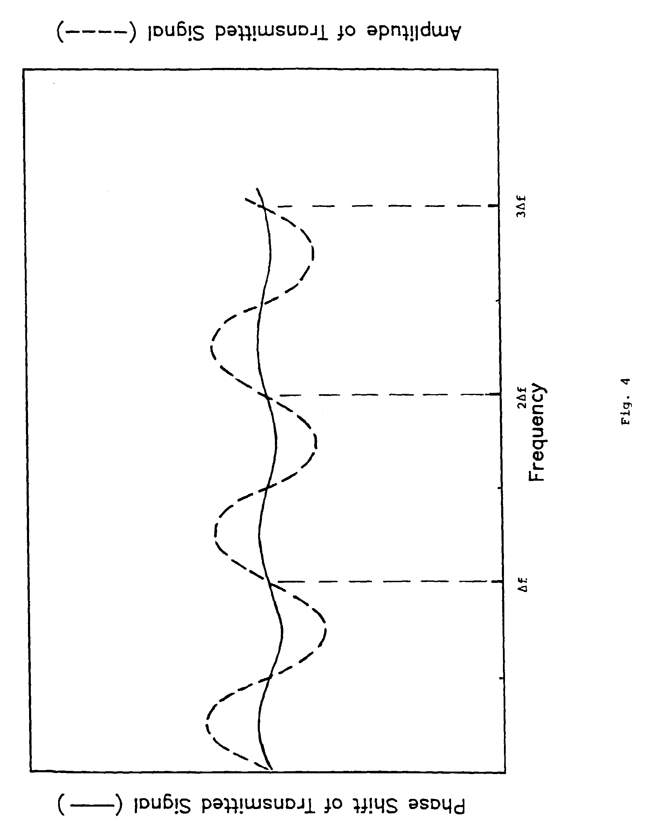

respectively, (where n = 1,2,3,...). However, in this instance only a single cycle of amplitude variation occurs as shown in Figure 4. The transmitted signal amplitude varies in a similar manner, as shown in Figure 4.

The error in the measurement of phase shift can be significantly reduced by determining it from the average of multiple measurements within the frequency range $f_1$ to $f_2$. Preferably, measurements at 10 or more frequencies, between $f_1$ and $f_2$, are made. However, a lesser number of measurements can be used if a lower measurement accuracy can be tolerated. The frequency may be varied over a wider range $n\triangle f$ (where, n = 1,2,3,...), however, this does not further improve measurement accuracy and has the disadvantage of requiring a wider bandwidth microwave oscillator.

Brief Description of the Drawings

Some embodiments of this invention will now be described, by way of example only, with reference to the accompanying drawings in which:

Fig. 1 is a schematic diagram showing transmitted and reflected EM waves generated on transmission of a microwave signal through a dielectric medium in air;

Fig. 2 is a schematic diagram showing the variation in the magnitude of the phase shift of a signal transmitted through a lossy dielectric, as a function of dielectric path length;

Fig. 3 is a schematic diagram showing the variation in the magnitude of the amplitude of a signal transmitted through a lossy dielectric, as a function of dielectric thickness;

Fig. 4 is a schematic diagram showing the variation in the magnitude of the phase shift and amplitude of a signal transmitted through a constant thickness lossy dielectric as a function of frequency; and

Fig. 5 is a schematic diagram of an apparatus for determination of moisture content of a sample from phase shift of a transmitted microwave signal according to this invention.

Modes for carrying out the Invention

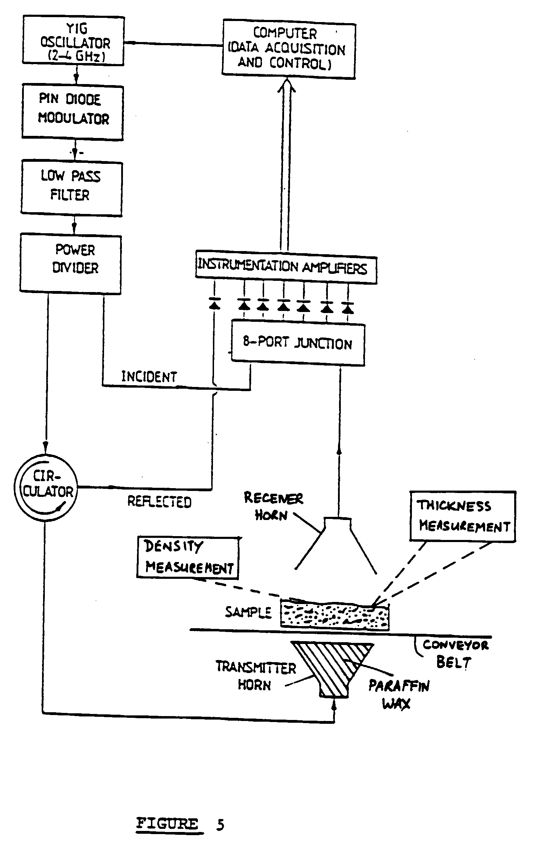

Referring to Fig. 5, the apparatus according to this invention includes a yttrium-iron-garnet (YIG) oscillator as a microwave source. The oscillator is voltage tunable over the frequency range 2-4 GHz at an output power level of approximately 30 mW. The oscillator output is amplitude modulated by a switchable pin diode modulator at a frequency of approximately 1 khZ, and filtered by a low pass filter (with a 0-4 GHz passband) to reduce the power level of unwanted harmonics produced by the oscillator. After passing through a power divider, the microwave signal is coupled, via a circulator, to a horn antenna for transmission through a sample positioned on a conveyor belt immediately above the transmitter. The receiver is a horn antenna positioned 300-500 mm above the transmitter. Dielectric matching of the transmitter horn and sample is achieved by filling the horn with paraffin wax which has a dielectric constant of approximately 1.5 and negligible dielectric loss at 3 GHz.

The relative power level and phase difference of the incident and transmitted signals are determined using an 8-port junction that functions as a vector voltmeter in the substantially known manner. The reflected power at the transmitter horn is monitored at the return port of the circulator using a diode detector. The output voltage of the diode detector is fed to a.c. coupled instrumentation amplifiers, each within an adjustable output gain of 30-1000, and the voltage measured with a data logger interfaced to an IBM-PC computer.

The effect of dielectric matching of the transmitter and sample was determined from preliminary measurements on a perspex sample. Perspex was used because it has a low relative dielectric constant and loss factor, 2.25 and 0.02 respectively at 3 GHz, for which the predicted improvement in measurement accuracy was within the limit of detection of the measurement technique, and the thickness could be accurately measured. Measurements were made for a 6-66 mm thickness sample, in 6 mm steps, using the apparatus of Fig. 5 with and without dielectric matching of the transmitter. Measurements of phase shift were linearly correlated with sample thickness using least squares regression and the r.m.s. errors obtained from these correlations are presented in Table 1 below. The r.m.s. errors in Table 1 represent the total measurement error, and one component of this is the error due to interference of transmitted and reflected signals. For phase shift there is approximately a 3.6 times improvement in measurement

## TABLE 1

R.m.s. errors for correlations of phase shift versus thickness from measurements using the gauge in Fig. 1.

| Measurement Conditions | Measurement Frequency (GHz) | Perspect Thickness (mm) | R.m.s. error/ Phase Shift (Degrees) |
|---|---|---|---|
| In air | 3.3 | 6.66 | 5.0 ( 6.1% )* |
| Dielectric filled transmitter | 3.3 | 6.66 | 3.6 ( 4.4% ) |
| In air | 2.8-3.8 | 6.66 | 2.7 ( 3.3% ) |
| Dielectric filled transmitter | 2.8-3.8 | 6.66 | 1.4 ( 1.7% )* |

Mean % relative error = (R.m.s. error/Mean Phase Shift x 100%).

To compare phase shift techniques for the determination of moisture in coal, measurements were made on a range of total product coals (from NSW) coal washeries) using the apparatus of Fig. 5. Details of the coal samples used in these measurements are given in Table 2.

TABLE 2

| Ash and particle size distributions of coal samples used in laboratory measurements on the prototype microwave moisture gauge. | | | | | | | |
|---|---|---|---|---|---|---|---|
| Washery | Sample Code* | Ash+ (wt%) | Particle Size Distribution (wt%) | | | | |
| | | | 5-50 (mm) | 3-5 (mm) | 1-3 (mm) | 0.5-1 (mm) | <0.5 (mm) |
| Newcastle | F1 | 9.6 | - | 17.4 | 43.9 | 15.6 | 23.1 |
| Metropolitan | F2 | 12.1 | - | 1.8 | 26.4 | 22.0 | 49.8 |
| Stockton Borehole | F3 | 7.9 | - | 3.6 | 40.3 | 21.3 | 34.8 |
| AIS | F4 | 13.0 | - | 4.1 | 25.0 | 21.3 | 49.6 |
| Blend of F1-F4 | B1 | 10.1 | - | 11.7 | 31.5 | 21.5 | 35.3 |

*F: Crushed total product coal. B: blend. All are high-volatile A and medium-volatile bituminous (ASTM rank) coals from Broken Hill Proprietary Company Limited (BHP) Washeries. B1: blend of F1-F4 used as feed to BHP Newcastle coke ovens.

+ Ash determined on air-dried basis.

Samples of known moisture content were prepared by thoroughly drying a $\approx$30 kg sample of each of the coals in Table 2 (in an air oven at 105°C) and progressively adding sufficient water to obtain a known moisture in the range of 0-15 wt%. At each stage of moisture addition, the sample was mixed until completely homogeneous and replicate subsamples were taken for a moisture determination. The accuracy of the moisture determination by oven-drying was approximately ±0.1% moisture. The samples were packed into a wooden sample container (dimensions: 320 x 360 x 250 mm) to depths of approximately 50, 100, 150, 200 and 250 mm) for analysis. In the standard measurement geometry, the sample container was centrally positioned immediately above the dielectric filled transmitter horn. The mass per unit area (W) of each sample in the measurement path was calculated from the sample weight and the sample container dimensions. The phase shift at each sample height and moisture content were calculated from the average of 100 measurements of the power at the outputs of the 8-port junction. The phase shift of the empty sample container was subtracted from these measurements to yield a phase shift due to the sample alone.

The phase shift ($\phi$) measured at 21 frequencies (0.05 GHz steps) in the range 2.8-3.8 Ghz. For sample F1 the phase shift was also determined at a frequency of 3.3 Ghz. The measured $\phi$/W was correlated with oven-dried moisture (M) using a least squares fitting technique and equations of the form

$$M = d_0 + d_1 (\phi/W) + d_2 (\phi/W)^2 \hspace{3cm} (11)$$

where $d_0$, $d_1$, $d_2$ are fitting constants. The r.m.s. errors for correlation on single and multiple frequency measurements on sample F1 are presented in Table 3.

TABLE 3

| R.m.s. errors for correlations of phase shift against oven-dried moisture. | | | |
|---|---|---|---|
| Sample Code | Sample Thickness (mm) | Measurement Frequency (GHz) | R.M.S. Error (wt% moisture) |
| F1 | 50-250 | 3.3 | 0.36 |
| | | 2.8-3.8* | 0.33 |

* 21 measurements (0.05 GHz steps)

These results also indicate there is a significant improvement in measurement accuracy when using multiple frequency measurements. The component of the r.m.s. error corresponding to the observed improvement in measurement accuracy is 0.14 wt% moisture for phase shift.

Comparative Example

Measurements of moisture content derived from measurements of attenuation and phase shift were determined for samples F1-F4 and B1. The r.m.s. errors for multiple frequency measurements are presented in Table 4. The mean r.m.s. error for all samples are 0.37 and 1.14 wt% moisture for phase shift and attenuation respectively, indicating approximately a three times improvement in measurement accuracy when using a measurement of phase shift for the determination of moisture in coal.

TABLE 4

| Correlation between gauge moisture and oven-dried moisture for samples B1 and F1-F4, at moisture contents in the range 0-15 wt%. | | |
|---|---|---|
| Sample Code | No.of Data Points+ | R.M.S. Error (wt% moisture) |
| | | Equation (11) | Attenuation |
| F1 | 30 | 0.33 | 1.26 |
| F2 | 30 | 0.47 | 1.03 |
| F3 | 30 | 0.31 | 1.03 |
| F4 | 30 | 0.35 | 1.30 |
| B1 | 30 | 0.37 | 1.10 |

+ Measurements at five heights at each of six moistures.

**Claims**

1.  Apparatus for the determination of the moisture content of a sample of varying thickness on a conveyor belt, said apparatus comprising:

    generating means for generating microwave signals at a plurality of discrete frequencies, said generating means being adapted to generate said microwave signals sequentially at frequencies selected to compensate for frequency dependent cyclic variation of the propagation characteristics of the microwave signals transmitted through a sample of varying thickness;
    a first antenna for location on one side of said conveyor belt to direct said microwave signals through the sample;
    a second antenna for location on the opposite side of said belt to receive the microwave signals transmitted through the sample; and
    means for providing a measure of mass per unit area of the sample;
    the apparatus being characterised by
    means for providing measures of the phase shifts of the received signals with respect to the transmitted signals at said discrete frequencies; and
    means for generating a measure of moisture content of the sample based on said measures of phase shifts and mass per unit area.

2.  Apparatus as claimed in Claim 1, characterised in that said discrete frequencies are equally spaced and the range encompasses one or more periods of the frequency dependent cyclic variation in propagation characteristics within the sample.

3.  Apparatus as claimed in either of Claims 1 and 2, characterised in that said means for generating a measure of moisture content is adapted to average the phase shifts of the respective signals to provide a single representative phase shift.

4.  Apparatus as claimed in any one of Claims 1 to 3, characterised in that said means to provide a measure of mass per unit area of the sample uses measures of density and thickness.

5.  Apparatus as claimed in any preceding claim, characterised in that said plurality of discrete frequencies is within the frequency range of 2 to 4GHz.

6. Apparatus as claimed in any preceding claim, characterised in that said plurality of discrete frequencies is greater than ten.

7. Apparatus as claimed in any preceding claim, characterised in that impedance matching material having a dielectric constant similar to that of the sample is provided and is positioned between the first antenna and the sample in use of the apparatus to reduce interference of the transmitted signals with signals reflected from the sample.

8. Apparatus as claimed in Claim 7, characterised in that the distance from the first antenna to the sample in use of the apparatus is substantially less than the wavelengths of the microwave signals.

9. A method for the determination of the moisture content of a sample of varying thickness on a conveyor belt, said method comprising the following steps:

transmitting, through said sample, microwave signals at a plurality of discrete frequencies, said microwave signals being generated sequentially at frequencies selected to compensate for frequency dependent cyclic variation of the propagation characteristics of the microwave signals transmitted through a sample of varying thickness; and
providing a measure of mass per unit area of the sample;
the method being characterised by the steps of
providing measures of the phase shifts of the received signals with respect to the transmitted signals at said discrete frequencies; and
generating a measure of moisture content of the sample based on said measures of phase shifts and mass per unit area.

10. A method as claimed in Claim 9, characterised in that said discrete frequencies are equally spaced.

11. A method as claimed in either of Claims 9 and 10, characterised in that said phase shifts are averaged to provide a single representative phase shift.

12. A method as claimed in any one of Claims 9 to 11, characterised in that said plurality of discrete frequencies is within the frequency range of 2 to 4GHz.

13. A method as claimed in any one of Claims 9 to 12, characterised in that said plurality of discrete frequencies is greater than ten.

14. A method as claimed in any one of Claims 9 to 13, further characterised by the step of positioning, between the sample and an antenna which transmits said signals, an impedance matching material having a dielectric constant similar to that of the sample.

15. A method as claimed in Claim 14, further characterised by the step of positioning the antenna at a distance from the sample which is substantially less than the wavelengths of the microwave signals.

**Patentansprüche**

1. Vorrichtung für die Bestimmung des Flüssigkeitsgehalts einer Probe ungleicher Dicke auf einem Förderband, wobei die Vorrichtung folgendes aufweist;

eine Generiervorrichtung zum Generieren von Mikrowellensignalen bei einer Vielzahl diskreter Frequenzen, wobei die Generiervorrichtung angepaßt ist, um die Mikrowellensignale sequenziell bei Frequenzen zu generieren, die ausgewählt sind, um eine frequenzabhängige zyklische Schwankung der Ausbreitungscharakteristiken der Mikrowellensignale zu kompensieren, die durch eine Probe ungleicher Dicke gesendet werden;

eine erste Antenne zur Anordnung auf einer Seite des Förderbands, um die Mikrowellensignale durch die Probe zu lenken;

eine zweite Antenne zur Anordnung auf der gegenüberliegenden Seite des Förderbands, um die Mikrowellensignale aufzunehmen, die durch die Probe gesendet werden; und

Eine Vorrichtung zum Bereitstellen eines Meßwerts der Masse pro Flächeneinheit der Probe;
wobei die Vorrichtung gekennzeichnet ist durch

eine Vorrichtung zum Bereitstellen von Meßwerten der Phasenverschiebungen der empfangenen Signale bezüglich der bei den diskreten Frequenzen gesendeten Signale; und

eine Vorrichtung zum Generieren eines Meßwerts des Feuchtigkeitsgehalts der Probe basierend auf den Meßwerten der Phasenverschiebungen und der Masse pro Flächeneinheit.

2. Vorrichtung nach Anspruch 1, dadurch gekennzeichnet, daß die diskreten Frequenzen den gleichen Abstand haben und den Bereich von einer oder mehreren Perioden der frequenzabhängigen zyklischen Schwankung in den Ausbreitungscharakteristiken in der Probe einschließen.

3. Vorrichtung nach Anspruch 1 oder 2, dadurch gekennzeichnet, daß die Vorrichtung zum Generieren eines Meßwerte des Feuchtigkeitsgehalt angepaßt ist, um die Phasenverschiebungen der jeweiligen Signale zu mitteln, um eine einzige repräsentative Phasenverschiebung bereitzustellen.

4. Vorrichtung nach einem der Ansprüche 1 bis 3, dadurch gekennzeichnet, daß die Vorrichtung zum Bereitstellen eines Meßwerts pro Flächeneinheit der Probe Meßwerte der Dichte und Dicke verwendet.

5. Vorrichtung nach einem vorhergehenden Anspruch, dadurch gekennzeichnet, daß die Vielzahl diskreter Frequenzen in dem Frequenzbereich von 2 bis 4 GHz liegt.

6. Vorrichtung nach einen vorhergehenden Anspruch, dadurch gekennzeichnet, daß die Vielzahl diskreter Frequenzen größer als 10 ist.

7. Vorrichtung nach einem vorhergehenden Anspruch, dadurch gekennzeichnet, daß Material, das eine passende Impedanz und eine Dielektrizitätskonstante aufweist, die ähnlich zu der von der Probe ist, zur Verfügung gestellt und zwischen der ersten Antenne und der Probe beim Einsatz der Vorrichtung angeordnet wird, um eine Interferenz der gesendeten Signale mit Signalen zu reduzieren, die von der Probe reflektiert werden.

8. Vorrichtung nach Anspruch 7, dadurch gekennzeichnet, daß der Abstand von der ersten Antenne zu der Probe beim Einsatz der Vorrichtung wesentlich geringer als die Wellenlängen der Mikrowellensignale ist.

9. Verfahren für die Bestimmung des Feuchtigkeitsgehalts einer Probe ungleicher Dicke auf einem Förderband, wobei das Verfahren die folgenden Schritte umfaßt:

Senden von Mikrowellensignalen durch die Probe bei einer Vielzahl diskreter Frequenzen, wobei die Mikrowellensignale sequenziell bei Frequenzen generiert werden, die ausgewählt sind, um eine frequenzabhängige zyklische Schwankung der Ausbreitungscharakteristiken der Mikrowellensignale zu kompensieren, die durch eine Probe ungleicher Dicke gesendet werden; und

Bereitstellen eines Meßwerts der Masse pro Flächeneinheit der Probe;
wobei das Verfahren durch folgende Schritte gekennzeichnet ist:

Bereitstellen von Meßwerten der Phasenverschiebungen der empfangenen Signale bezüglich der bei den diskreten Frequenzen gesendeten Signale; und

Generieren eines Meßwerts des Feuchtigkeitsgehalts der Probe basierend auf den Meßwerten der Phasenverschiebungen und der Masse pro Flächeneinheit.

10. Verfahren nach Anspruch 9, dadurch gekennzeichnet, daß die diskreten Frequenzen den gleichen Abstand haben.

11. Verfahren nach Anspruch 9 oder 10, dadurch gekennzeichnet, daß die Phasenverschiebungen gemittelt werden, um eine einzige repräsentative Phasenverschiebung bereitzustellen.

12. Verfahren nach einem der Ansprüche 9 bis 11, dadurch gekennzeichnet, daß die Vielzahl diskreter Frequenzen in dem Frequenzbereich von 2 bis 4 GHz liegt.

13. Verfahren nach einem der Ansprüche 3 bis 12, dadurch gekennzeichnet, daß die Vielzahl diskreter Frequenzen größer als 10 ist.

14. Verfahren nach einem der Ansprüche 9 bis 13, desweiteren gekennzeichnet durch den Schritt des Anordnens eines Materials, das eine passende Impedanz und eine dielektrische Konstante aufweist, die ähnlich zu der von der Probe ist, zwischen der Probe und einer Antenne, die die Signale sendet.

15. Verfahren nach Anspruch 14, desweiteren gekennzeichnet durch den Schritt des Anordnens der Antenne in einem Abstand von der Probe, der wesentlich geringer als die Wellenlängen der Mikrowellensignale ist.

## Revendications

1. Appareil pour la détermination de la teneur en humidité d'un échantillon d'épaisseur variable sur une bande transporteuse, ledit appareil comprenant:

   un moyen de génération pour générer des signaux microondes à un ensemble de plusieurs fréquences discrètes, ledit moyen de génération étant adapté pour générer lesdits signaux microondes de façon séquentielle à des fréquences choisies pour compenser la variation cyclique dépendant de la fréquence des caractéristiques de propagation des signaux microondes transmis à travers un échantillon d'épaisseur variable;
   une première antenne destinée à être placée sur l'un des côtés de cette bande transporteuse pour diriger lesdits signaux microondes à travers l'échantillon;
   une seconde antenne destinée à être placée sur le côté opposé de ladite bande pour recevoir les signaux microondes transmis à travers l'échantillon ; et
   un moyen pour fournir une mesure de masse par unité de surface de l'échantillon;
   l'appareil étant caractérisé par
   un moyen pour fournir des mesures des déphasages des signaux reçus par rapport aux signaux transmis auxdites fréquences discrètes ; et
   un moyen pour générer une mesure de la teneur en humidité de l'échantillon basée sur lesdites mesures de déphasage et de masse par unité de surface.

2. Appareil suivant la revendication 1, caractérisé en ce que lesdites fréquences discrètes sont également espacées et que la gamme englobe une ou plusieurs périodes de la variation cyclique dépendant de la fréquence des caractéristiques de propagation à l'intérieur de l'échantillon.

3. Appareil suivant l'une ou l'autre des revendications 1 ou 2, caractérisé en ce que ledit moyen pour générer une mesure de la teneur en humidité est adapté pour moyenner les déphasages des signaux respectifs afin de fournir un déphasage représentatif unique.

4. Appareil suivant l'une quelconque des revendications 1 à 3, caractérisé en ce que ledit moyen pour générer une mesure de masse par unité de surface de l'échantillon utilise des mesures de densité et d'épaisseur.

5. Appareil suivant l'une quelconque des revendications précédentes, caractérisé en ce que ledit ensemble de plusieurs fréquences discrètes est compris à l'intérieur de la gamme de fréquences de 2 à 4 GHz.

6. Appareil suivant l'une quelconque des revendications précédentes, caractérisé en ce que le nombre desdites fréquences discrètes est supérieur à dix.

7. Appareil suivant l'une quelconque des revendications précédentes, caractérisé en ce qu'un matériau d'accord d'impédance ayant une constante diélectrique similaire à celle de l'échantillon est fourni et est placé entre la première antenne et l'échantillon au cours de l'utilisation de l'appareil pour réduire l'interférence des signaux transmis avec des signaux réfléchis par l'échantillon.

8. Appareil suivant la revendication 7, caractérisé en ce que la distance entre la première antenne à l'échantillon au cours de l'utilisation de l'appareil est notablement inférieure aux longueurs d'onde des signaux microondes.

9. Procédé pour la détermination de la teneur en humidité d'un échantillon d'épaisseur variable sur une bande transporteuse, ledit procédé comprenant les étapes suivantes:

la transmission, à travers dudit échantillon, de signaux microondes à un ensemble de plusieurse fréquences discrètes, lesdits signaux microondes étant générés de façon séquentielle à des fréquences choisies pour compenser la variation cyclique dépendant de la fréquence des caractéristiques de propagation des signaux microondes transmis à travers un échantillon d'épaisseur variable ; et
la fourniture d'une mesure de masse par unité de surface de l'échantillon;
le procédé étant caractérisé par les étapes de
fourniture de mesures des déphasages des signaux reçus par rapport aux signaux transmis auxdites fréquences discrètes ; et
génération d'une mesure de la teneur en humidité de l'échantillon basée sur lesdites mesures de déphasage et de masse par unité de surface.

10. Procédé suivant la revendication 9, caractérisé en ce que lesdites fréquences discrètes sont également espacées.

11. Procédé suivant l'une ou l'autre des revendications 9 et 10, caractérisé en ce que lesdits déphasages sont moyennés afin de fournir un déphasage représentatif unique.

12. Procédé suivant l'une quelconque des revendications 9 à 11, caractérisé en ce que ledit ensemble de plusieurs fréquences discrètes est compris à l'intérieur de la gamme de fréquence de 2 à 4 GHz.

13. Procédé suivant l'une quelconque des revendications 9 à 12, caractérisé en ce que le nombre dudit ensemble de plusieurs fréquences discrètes est supérieur à dix.

14. Procédé suivant l'une quelconque des revendications 9 à 13, caractérisé de plus par l'étape de mise en place, entre l'échantillon et une antenne qui transmet lesdits signaux, d'un matériau d'accord d'impédance ayant une constante diélectrique similaire à celle de l'échantillon.

15. Procédé suivant la revendication 14, caractérisé de plus par l'étape de mise en place de l'antenne à une distance de l'échantillon qui est notablement inférieure aux longueurs d'onde des signaux microondes.

Transmitted Signals

$T_1$

$T_2$

Air

Dielectric

Air

$R_1$

$R_2$

Incident Signal

EP 0 487 582 B1

Fig. 1

Fig 2

Fig. 3

Fig. 4

**FIGURE 5**